# EUROPEAN PATENT APPLICATION

(11) **EP 4 851 865 A1**
(43) Date of publication of application: **09.12.2026**
(21) Application number: 26183302.4
(22) Date of filing: 05.06.2026
(51) Int. Cl.: G06N 3/08, G02B 27/01, G06F 1/16, G06F 3/01, G06N 20/00, G06V 20/20, G06F 3/0481

(54) **MOVING PLATFORM CLASSIFIER AND SELECTION OF SIGNAL PROCESSING CONFIGURATIONS**

(30) Priority: 06.06.2025 US 202563819388 P; 14.05.2026 US 202619677757
(71) Applicant: Apple Inc., Cupertino, CA 95014 (US)
(72) Inventor: LU, Yao, Cupertino, 95014 (US); MARIN, Giulio, Cupertino, 95014 (US); GUO, Huiwen, Cupertino, 95014 (US); YAN, Jingkai, Cupertino, 95014 (US); PAZ-PEREZ, Lina M., Cupertino, 95014 (US); BAIG, Mohammad Haris, Cupertino, 95014 (US); ZHANG, Ziyu, Cupertino, 95014 (US); WU, Hung-Chun, Cupertino, 95014 (US)
(74) Representative: Zacco Denmark A/S

(57) **Abstract**

Techniques are disclosed herein for selecting signal processing (SP) configurations. In some examples, a method comprises obtaining sensor data from an environment around the mobile device; determining, using the sensor data, that the mobile device is on a platform that is moving; determining, using the sensor data, a platform type of the platform from a plurality of platform types; selecting, based on the platform type, signal processing (SP) configurations from a plurality of SP configurations for performing the signal-based processing while the platform is moving, wherein each of the plurality of SP configurations is associated with a different platform type; obtaining image data; performing, using the SP configurations, signal-based processing of the image data to obtain display images; and displaying the display images on the display of the mobile device.

## Description

### CROSS-REFERENCE TO OTHER APPLICATIONS

This application claims priority to U.S. Patent Application No. 19/677,757, for "MOVING PLATFORM CLASSIFIER AND SELECTION OF SIGNAL PROCESSING CONFIGURATIONS" filed on May 14, 2026, which claims benefit of and priority to U.S. Provisional Application No. 63/819,388, for "MOVING PLATFORM CLASSIFIER AND SELECTION OF SIGNAL PROCESSING CONFIGURATIONS" filed on June 6, 2025, which is herein incorporated by reference in its entirety for all purposes.

### BACKGROUND

Headset devices use image-based techniques, such as simultaneous localization and mapping (SLAM), to create and update a map of an environment and also determine the position of a user in the environment (e.g., as the user moves around and/or looks around the environment). These image-based techniques, however, may not perform well when there are changes in the environment, changes in lighting conditions, obstructed objects, and the like. These image-based techniques may also not perform well when the environment itself is moving (e.g., a car, train, airplane, ...).

### BRIEF SUMMARY

Various techniques are provided for a moving platform classifier and selection of a signal processing (SP) configuration based on the moving platform type. A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

According to some examples, a headset device performs a moving platform classification technique and selects SP configurations. Generally, the headset device (1) determines that the headset device is on a moving platform; (2) determines the type of moving platform (e.g., a car, airplane, train, elevator, ship, and/or some other type of movable platform); and (3) selects the SP configuration to use to perform signal-based processing based on the type of the movable platform. The SP configurations, from which a SP configuration is selected, are optimized for the type of moving platform and are configured to provide a better user experience (e.g., more stable images) as compared to not changing the SP configuration based on the type of the moving platform.

One general aspect includes a method performed by a mobile device having one or more cameras and one or more processors configured to perform signal-based processing for displaying extended reality on a display of the mobile device. The method may also include obtaining, using one or more sensors of the mobile device, sensor data from an environment around the mobile device; determining, using the sensor data, that the mobile device is on a platform that is moving; determining, using the sensor data, a platform type of the platform from a plurality of platform types; selecting, based on the platform type, a signal processing (SP) configuration from a plurality of SP configurations for performing the signal-based processing while the platform is moving, where each of the plurality of SP configurations is associated with a different platform type. The method also includes obtaining image data. The method also includes performing, using the SP configurations, signal-based processing of the image data to obtain display images; and displaying the display images on the display of the mobile device. Other examples of this aspect include corresponding computer systems, apparatus, and computer programs recorded on one or more computer storage devices, each configured to perform the actions of the methods.

Implementations may include one or more of the following features. The method may include obtaining audio data from one more audio sensors of the mobile device. Obtaining the sensor data from one or more sensors of the mobile device, may include obtaining image data from the one more cameras of the mobile device. Obtaining the sensor data from one or more sensors of the mobile device, may include obtaining motion data from one or more motion sensors of the mobile device. The method may include presenting a prompt on a display of mobile device that indicates to change to a travel mode responsive to determining that the mobile device is on the platform that is moving. The method may include suppressing the presenting of the prompt. The method may include determining that the platform is not moving and in response, performing a different signal-based processing. Determining the platform type of the platform from a plurality of platform types may include using one or more machine learning models. The one or more machine learning models may include at least one of a first machine learning model that receives image data, a second machine learning model that receives audio data, and a third machine learning model that receives motion data. Obtaining, using the one or more sensors of the mobile device, sensor data from the environment around the mobile device may include obtaining image data from one or more cameras that include a wide-angle lens and operate in a low-light environment. Determining that the mobile device is on the platform that is moving may be further based on the image data from the plurality of the cameras. Determining that the mobile device is on the platform that is moving may further be based on the scene-novelty-based inference. Determining that the mobile device is on the platform that is moving may be further based on the location of the mobile device. Performing the signal-based may further include detecting a window within the image data and excluding a portion of the image data corresponding to the detected window from the signal-based processing. The characteristics may include a size of a room that includes the mobile device; and where determining that the mobile device is on the platform that is moving may be further based on the characteristics of the map.

A system may include: one or more memories; and one or more processors in communication with the one or more memories and configured to execute instructions stored in the one or more memories to perform operations of the above method. A computer-readable medium storing a plurality of instructions that, when executed by one or more processors of a computing device, cause the one or more processors to perform operations of a method of the above method.

These and other embodiments of the disclosure are described in detail below. For example, other embodiments are directed to systems, devices, and computer readable media associated with methods described herein.

A better understanding of the nature and advantages of embodiments of the present disclosure may be gained with reference to the following detailed description and the accompanying drawings.

### BRIEF DESCRIPTION OF THE DRAWINGS

FIG. 1 is a diagram that provides an overview of an example electronic device (e.g., a wearable device such as a head-mounted display (HMD) or a headset), how a SP configuration can be selected for signal-based processing based on a type of moving platform while a user is wearing the headset, and views illustrating a stationary headset and a headset on a moving platform, according to examples of the present disclosure.
FIG. 2 shows a simplified diagram of an architecture for determining a type of a moving platform and selection of a signal processing (SP) configuration according to examples of the present disclosure.
FIG. 3 shows a simplified diagram of an architecture for reducing false positives of indicating the headset device is on a moving platform according to examples of the present disclosure.
FIG. 4 is a simplified flowchart of a technique for suppressing a hint to change to a travel mode based on location information according to at least one example.
FIG. 5 shows a technique for training a machine learning model according to examples of the present disclosure.
FIG. 6 shows an example machine learning model for a neural network according to examples of the present disclosure.
FIG. 7 is a simplified flowchart of a technique for determining a type of a moving platform and selection of a SP configuration according to at least one example.
FIG. 8 is a simplified flowchart of a technique for selecting a SP configuration and using the SP configurations to generate display images according to at least one example.
FIG. 9 is a block diagram of an example device, which may be a mobile device according to examples of the present disclosure.

### DETAILED DESCRIPTION

Using techniques described herein, an electronic device of a user (e.g., a headset device or "headset") performs a moving platform classification technique that determines the headset is on/within a moving platform, determines what type of moving the platform the headset is on/within, and selects a SP configuration based on the type of moving platform.

To determine whether the headset is on a moving platform and/or determine the type of the moving platform, the headset can analyze sensor data from one or sensors (e.g., image sensors, audio sensors, or motion sensors). In some examples, the headset uses one or more machine learning models to identify whether the platform is moving and the type of platform. According to some configurations, the machine learning model(s) can be configured to receive sensor data, such as image data, audio data, motion data, location data, and/or other types of sensor data to identify that the headset is on a moving platform and a type of the moving platform.

The machine learning model(s) may be trained using movement patterns of moving platforms (e.g., an airplane, a car, a train, ...) and human motion movement patterns to distinguish between physical environment motion and user motion. For example, motion of the physical environment such as a train may follow a constant and low frequency pattern, characterized by movements such as, inter alia, moving along a track, accelerating, decelerating, or maintaining a specific velocity. Likewise, motion of a user may include smaller, more intricate movements.

In some examples, the machine learning model(s) may be trained using actual data collected from moving platforms to learn to separate and filter differing relevant motions for improved accuracy and performance. According to some configurations, to help improve the accuracy of the model(s), the image data used to train the models includes image data obtained from fisheye cameras (i.e., wide field of view), and/or cameras designed to operate in low light levels. The sensor data may also include data from sensors such as doppler radar sensors or light detection and ranging (LIDAR) sensors to provide velocity information for the machine learning model. Additionally, the machine learning model(s) may utilize additional data from sensors such as ultra-wideband (UWB), Wi-Fi, lasers, cell-based sensors to provide global positioning information to assist with localization attributes.

In some examples, in response to determining that the headset is on a moving platform, a prompt/hint, which may be referred to herein as a "prompt", may be provided/presented to the user of the headset to activate a "travel mode" of the headset. Generally, the "travel mode" may be selected (manually by a user and/or programmatically by a component/device) for use when the headset is on/within a moving platform and is directed at stabilizing the visuals (e.g., keeping the items in the view of the headset stable). In some configurations, the hint may be displayed within a user interface element that is presented on a display of the headset device. According to some configurations, the user may select an option presented on the display to activate the travel mode and/or interact with a component of the headset (e.g., adjust/touch a digital crown of the headset) to activate the travel mode, which causes the headset to use a SP configuration optimized for the type of the moving platform detected by the headset.

When the headset is determined to be on a moving platform, a SP configuration is selected, from a plurality of different SP configurations, to perform mapping and localization processing that are based on the type of the moving platform. For instance, when the moving platform type identifies that the headset is on a train, then SP configurations configured/optimized for a train are selected. Similarly, when the moving platform type indicates that the headset is on a plane, then SP configurations for a plane are selected. When the moving platform type indicates that the headset is on a car, then settings for a car are selected, and the like. In some examples, the user of the headset does not identify the SP configurations to select. Instead, the SP configurations are automatically selected based on the identified type of moving platform. In this way, once the travel mode for the headset is activated, the SP configurations optimized for the type of moving platform that the headset is on have already been selected. For example, if the type of moving platform is identified to be an airplane, then the airplane SP configurations may include disabling gyros on the headset such that the view within the headset is stable. The SP configurations can be SLAM configurations and/or some other type of localization and/or mapping technique.

According to some examples, one or more additional techniques are performed to help conserve battery of the headset and reduce false positives associated with determining when a headset is on a moving platform. For instance, in order to increase the accuracy of the detection that the headset is on a moving platform, the system may employ one or more multi-camera aggregation techniques, scene-novelty based inference techniques, and location-based suppression techniques in addition to the initial identification performed by one or more machine learning models.

Implementations of the subject technology described herein provide an XR system for displaying virtual content with an electronic device that is on or near a moveable platform in various motion states of the moveable platform, such as when the moveable platform is stationary or in motion with a constant or changing velocity. Because an electronic device that displays virtual content often tracks its own motion in the physical setting in order to render the virtual content at a fixed location in a virtual or mixed reality setting, motion of the electronic device that is due to motion of a moving platform can cause undesired errors in the display of the virtual content.

### I. SELECTING A SP CONFIGURATION FOR A HEADSET BASED ON MOVING PLATFORM

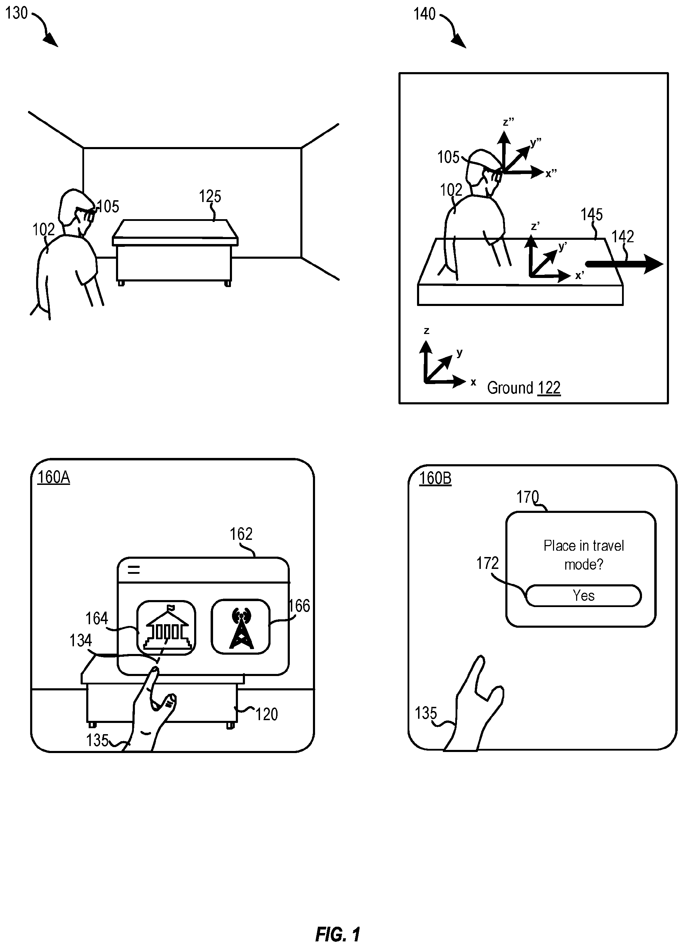

The following description of FIG. 1 provides an overview of an example electronic device (e.g., a wearable device such as a head-mounted display (HMD) or a headset), how a SP configuration can be selected for signal-based processing based on a type of moving platform while a user is wearing the headset, and views illustrating a stationary headset and a headset on a moving platform.

FIG. 1 is a diagram illustrating an example electronic headset device 105 operating in a physical environment with and without a moving platform, in accordance with some examples. According to some examples, the user 102 is illustrated wearing an electronic headset device 105 (which may be referred to herein as a "headset"). A headset, such as headset device 105, can provide an immersive experience for many different types of applications, such as virtual reality (VR) applications, extended reality (XR) applications, augmented reality (AR) applications, mixed reality (MR) applications, and the like. Interacting with other electronic devices, while wearing a headset device 105 can be useful for improving a user experience and for improving performance of immersive technologies.

In the following disclosure, a physical environment refers to a physical world that people can sense and/or interact without aid of electronic devices. The physical environment may include physical features such as a physical surface or a physical object. For example, the term physical environment may correspond to a physical park that includes physical trees, physical buildings, and physical people. People can directly sense and/or interact with the physical environment such as through sight, touch, hearing, taste, and smell. In contrast, an XR environment refers to a wholly or partially simulated environment that people sense and/or interact with via an electronic device. For example, the XR environment may include Augmented Reality (AR) content, Mixed Reality (MR) content, Virtual Reality (VR) content, and/or the like. With an XR system, a subset of a person's physical motions, or representations are tracked, and in response, one or more characteristics of one or more virtual objects simulated in the XR environment, are adjusted in a manner that comports with at least one law of physics.

As an example, the XR system may detect head movement and, in response, adjust graphical content and an acoustic field presented to the person in a manner similar to how such views and sounds would change in a physical environment. As another example, the XR system may detect movement of the electronic device presenting the XR environment (e.g., a mobile phone, a tablet, a laptop, or the like) and adjust graphical content and an acoustic field presented to the person in a manner, similar to how such views and sounds would change in a physical environment. In some situations (e.g., for accessibility reasons), the XR system may adjust characteristic(s) of graphical content in the XR environment in response to representations of physical motions (e.g., vocal commands).

According to some examples, a user interacts with an XR environment using a headset 105 that includes an integrated display. In some cases, a head-mountable system may be configured to accept an external opaque display (e.g., a smartphone). The head-mountable system may incorporate one or more imaging sensors (e.g., cameras) to capture images or video of the physical environment, and/or one or more microphones to capture audio of the physical environment. Rather than an opaque display, a head-mountable system may have a transparent or translucent display. The transparent or translucent display may have a medium through which light representative of images is directed to a person's eyes.

The display may utilize digital light projection, OLEDs, LEDs, uLEDs, liquid crystal on silicon, laser scanning light source, or any combination of these technologies. The medium may be an optical waveguide, a hologram medium, an optical combiner, an optical reflector, or any combination thereof. In some implementations, the transparent or translucent display may be configured to become opaque selectively. Projection-based systems may employ retinal projection technology that projects graphical images onto a person's retina. Projection systems also may be configured to project virtual objects into the physical environment, for example, as a hologram, or on a physical surface.

The electronic headset device 105 may include sensors that can be used to capture information (e.g., images, motion, sound, lighting characteristics, ranging information, ...) about the physical environment and the objects within it, as well as information about the user 102. In some configurations, the sensors may include one or more motion sensors, cameras, microphones, infrared sensors, depth sensors, pressure sensors, touch sensors, light sensors, inertial measurement units (IMUs), gyroscopic sensors, and/or other sensors. The information about the physical environment, such as physical environment 130 and physical environment 140, and/or user 102 may be used to provide visual and audio content and/or to identify the current location of the physical environment (e.g., including locations of objects, such as desk 125, in the physical environment 130) and/or the location of the user within the physical environment.

As an example, one or more cameras of the headset device 105 may obtain image data from the physical environment that is analyzed to detect objects (e.g., desk 125, moving platform 145, ...) that are within an environment of the user as well as detect a gaze direction of the user wearing the headset. As an example, one or more eye tracking cameras can be used to determine a gaze direction of each eye of the user. In some configurations, the gaze direction can be used by the headset device 105 to determine what object/objects the user 102 is looking at. The cameras can also be used to detect whether the user's hands are touching the electronic device.

In some implementations, views, such as view 160A and view 160B of an extended reality (XR) environment, may be provided to user 102 via headset 105. XR may be an umbrella term that covers virtual reality (VR), augmented reality (AR), mixed reality (MR), and the like. Such an XR environment may include views of a 3D environment that are generated based on camera images and/or depth camera images of the physical environment, as well as a representation of user 102 based on camera images and/or depth camera images of the user 102. Such an XR environment may include virtual content that is positioned at 3D locations relative to a 3D coordinate system (i.e., a 3D space) associated with the XR environment, which may correspond to a 3D coordinate system of the physical environment.

View 160A, provided via an electronic headset device 105, illustrates a display of virtual elements within the 3D physical environment 130. Providing a view, such as view 160A or 160B, may involve determining 3D attributes of the physical environment above (e.g., a position of the desk 125 in the physical environment 130, a size of the desk 125, a position and size of the hand 135, a size of the physical environment 130, etc.). In view 160A, the electronic device 120 is in an environment that does not include a moving platform.

View 160A illustrates providing a virtual user interface (UI) 162 on a display of the headset 105. In the illustrated example of view 160A, the UI 162 includes UI element 164 and UI element 166. Providing such a view may involve determining 3D attributes of the physical environment 130 above (e.g., a position of desk 125 in the physical environment 130, a size of the desk 125, a size of the physical environment 130, etc.) and positioning the virtual content, for example, the user interface 162, in a 3D coordinate system corresponding to that physical environment 130. In some examples, the user interface can include various content items, including a display of user interface (UI) elements. The user interface may be a user interface of an application, as illustrated in this example.

The user interface 162 is simplified for purposes of illustration and user interfaces in practice may include any degree of complexity, any number of content items, and/or combinations of 2D and/or 3D content. The user interface 162 may be provided by operating systems and/or applications of various types including, but not limited to, messaging applications, web browser applications, content viewing applications, content creation and editing applications, or any other applications that can display, present, or otherwise use visual and/or audio content

In some examples, a gesture can be used to interact with the user interface 162. For example, the user 102 may perform a specified gesture (e.g., point at a UI element, ...) to initiate an action. Gestures can be used for contextual control of electronic devices. A gesture can be a movement that conveys information, and, for example, a user can select a particular electronic device by pointing at the device. A user can gesture with a body part (e.g., a hand) or the user can gesture with an object such as a mobile device. Wearable mobile devices, such as a smartwatch or head mounted display device, can record a user's movements and these devices can be used to track a user's gestures.

In the examples of FIG. 1, a physical setting 140 of headset device 105 includes a moveable platform 145. Moveable platform 145 may be implemented, as examples, as a vehicle (e.g., a car, a bus, a truck, a golf cart, a train, an aircraft, a watercraft, a skateboard, a bicycle, an elevator, an escalator, a moving sidewalk, or any other platform that can move). It is appreciated that a moveable platform, such as moveable platform 145, may be moveable using its own power (e.g., a car, a bus, a watercraft, an elevator, an escalator, or an airplane) and/or responsive to an external force such as a pulling force or a pushing force (e.g., in the cases of a train car coupled to an engine, or a vehicle or a watercraft being pushed or towed).

As illustrated, moveable platform 145 is moving with a motion 142 (e.g., a speed and a direction) relative to the physical ground 122 in the physical setting 140. The physical ground 122 may represent, for example, the surface of the Earth (or a material that is fixed to the surface of the Earth) at or near the location of the headset 105. The physical ground 122 may form the basis of a fixed reference frame (e.g., the (x, y, z) reference frame) relative to which the moveable platform 145, electronic device 105, and/or other physical objects can move.

As illustrated, headset 105 is moving with a motion that is equal to the motion 142 of the moveable platform 145. For example, headset 105 may move together with the moveable platform 145 due to a coupling between the headset and the moveable platform 145. For example, coupling may include headset 105 being coupled to the moveable platform 145 by being worn or held by a user 102 that is sitting or standing on the moveable platform 145, or may include other direct or indirect couplings to the moveable platform 145 (e.g., due to the headset 105 resting on a table, a chair, or other structure of the moveable platform or being mounted to or otherwise secured to a structure of the moveable platform).

As briefly discussed above, different image-based techniques, such as simultaneous localization and mapping (SLAM), may not perform well when the environment itself is moving (e.g., a car, train, airplane, ...). When the environment itself is moving (e.g., when on a moveable platform, the visual data does not match the inertial data. Since the headset is in the moving platform, the inertial data will cause the content displayed by the headset to move even though the visual environment is not moving. Stated another way, when the inertial data indicates that the headset is moving, the displayed content is not properly anchored to the visual environment causing the user to view content that appears to be moving even though the headset is on the moving platform and moving at a same speed. Using the techniques described herein, the headset can detect when it is on a moving platform and also detect the type of moving platform. This information can be used to select a SP configuration that helps to anchor the displayed content, such as by disabling inertial data, using semantic information to filter out visual features that are not associated with the inside of the moving platform, ISP settings, and the like.

For example, tracking performance may degrade when confronted with a high-texture scene outside of a moving platform. This can result in visual instability where the virtual content rapidly shakes or floats away from its intended fixed position. To help improve the tracking performance, a signal processing (SP) configuration is selected based on the platform type. If the platform type is a car, a train, or a bus, the selected SP configuration can apply a segmentation process for a window. Because scenes outside these ground-based vehicles change frequently (e.g., passing trees or textured walls), a machine learning model, such as a Transformer-CNN fused backend, can be used to detect the boundaries of the window. Once the window is identified, the headset device 205 can exclude, or "black out" the image data and visual features from that specific window area prior to conducting the simultaneous localization and mapping (SLAM) analysis. Conversely, if the platform is determined to be an airplane, the window segmentation process may be omitted, as the view outside an airplane window lacks the fast-moving, high-texture features that typically disrupt tracking. Further details regarding motion prediction and extracting user motion data on moving platforms are described in U.S. Patent Application Publication No. US 2025/0110567 A1, which is hereby incorporated by reference in its entirety.

As discussed above, a headset 105 may use a selected SP configuration and image-based techniques (e.g., SLAM) to render and display objects so as to appear to the user of the headset 105 to be moving with the motion that is equal to the motion 142 of the moveable platform 145 (e.g., so as to appear stationary on the moveable platform). As discussed herein, the headset 105 may determine that the headset 105 in on a moving platform, determine a type of the moving platform, and then display objects at a stationary location on (or with respect to) the moveable platform 145 using a selected signal processing configuration from SP configurations. For example, the selected SP configuration for a particular moving platform may obtain but ignore some or all of the inertial data from the inertial sensors of the headset 105 when determining where to display objects while on the moveable platform 145.

Generally, the headset 105 may select a SP configuration from a plurality of SP configurations to account for the motion of the headset 105 that is at least partially due to the motion 142 of the moveable platform 145 by discontinuing, reducing, and/or modifying use of some or all of the sensor data and/or sensors that are affected by the motion of the moveable platform 145. For example, after determining that the headset 105 is moving with the moveable platform 145 using an IMU of the electronic device an electronic device such as headset 205 may continue to track motion of the electronic device using optical sensors and/or depth sensors of the electronic device while discontinuing use of and/or de-weighting (e.g., in a case in which a moving platform causes vibratory motion of the electronic device) some or all of the IMU data while platform-related changing velocity motion is detected.

View 160B illustrates providing a notification within a UI element 170 indicating that the headset has detected that it is on/within a moving platform and that the user should switch to a travel mode. In the illustrated example of view 160B, the UI element 170 provides a selectable UI element 172 to confirm switching to the travel mode. In other examples, the user 102 may perform some other action to select/confirm travel mode (e.g., a gesture, a movement of a physical control on the headset, ...). In yet other examples, the travel mode can be automatically/programmatically selected by the headset device 105.

### II. SYSTEM FOR DETERMINING MOVING PLATFORM TYPE AND SELECTIONOF A SP CONFIGURATION

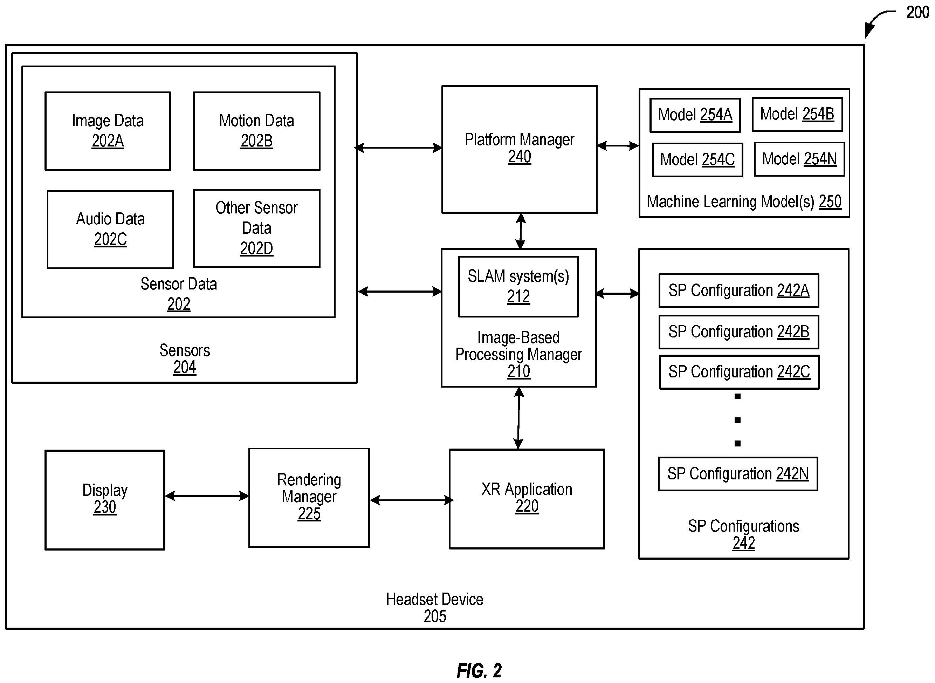

As briefly discussed above, different SP configurations may be selected based on a type of moving platform the headset is on/within. According to some configurations, the headset determines when to change SP configurations based on movement associated with the headset. FIG. 2 provides an example of the headset device selecting SP configurations based on a type of the moving platform.

FIG. 2 shows a simplified diagram of an architecture for determining a type of a moving platform and selection of a SP configuration, in accordance with some examples. As illustrated, FIG. 2 includes a headset device 205 (e.g., headset device 105). Headset device 205 includes sensors 204 configured to obtain sensor data 202, platform manager 240, image-based processing manager 210, XR application 220, rendering manager 225, display 230, SP configurations 240, and machine learning model(s) 250.

In the example of FIG. 2, headset 205 includes sensors 204 such as one or more image sensors, one or more motion sensors (e.g., inertial measurement unit (IMU) including one or more accelerometers and/or gyroscopes and/or compasses, and/or other magnetic and motion sensors, orientation sensors, and/or location sensors and/or other sensors) that provide sensor data (e.g., depth sensor data from one or more depth sensors, location data such as global positioning system (GPS) data, Wi-Fi location data, and/or near field communications location data, Camera(s) implementing one or more image sensors may also provide image data, such as static image data, one or more video streams, to platform manager 240 and/or image-based processing manager 210.

Image-based processing manager 210 may include one or more simultaneous localization and mapping (SLAM) systems 212 that generate mapping, location, and/or pose information, which may include three-dimensional scene information, such as a three-dimensional map of some or all of the physical environment of headset 205 and/or a device position, rotation, and/or motion (e.g., velocity and/or acceleration) within the physical environment, using the sensor data (e.g., the depth information, location data, motion data, magnetic data, images, and/or types of data) from sensors 204. For example, the image-based processing manager 210 may include SLAM systems, such as but not limited to a visual-only SLAM, a visual-inertial (VI) SLAM, LIDAR slams, and the like.

The image-based processing manager 210 may use a SP configuration 242 selected from SP configurations 242. As discussed above, different SP configurations 242 can be selected for use based on the type of moving platform determined by platform manager 240 and/or some other component device. For instance, SP configuration 242A may be associated with a car, SP configuration 242B may be associated with an airplane, SP configuration 242C may be associated with a train, and the like.

According to some examples, image-based processing manager 210 may detect motion of the headset 205 (e.g., in one, two, three, four, five, or six dimensions). For example, image-based processing manager 210 may detect up to three degrees of translational motion and/or up to three degrees of rotational motion of headset 205 (e.g., relative to a fixed reference frame such as a reference frame that is fixed to the surface of the Earth at or near the location of the electronic device such as the (x, y, z) reference frame (e.g., as illustrated in FIG. 1) , and/or relative to a moving reference frame such as a reference frame that is fixed to a moveable platform such as the (x', y', z') reference frame as illustrated in FIG. 1.

Although image-based processing manager 210 is depicted in FIG. 2 as a single element, image-based processing manager 210 may be implemented as multiple separate processes that are performed in series and/or in parallel for detection of device motion and/or motion of a moveable platform. Some or all of the operations described in connection with image-based processing manager 210 may be performed by platform manager 240, an XR application 220 and/or by a rendering manager 225 for computer-produced (CP) content such as rendering manager 225. In the example of FIG. 2, the image-based processing manager 210 includes a SLAM system 212 that receives visual (e.g., image) data from one or more image sensors 204 (e.g., wide angle camera(s), low light camera(s), high definition camera(s), ...) and inertial data (e.g., gyroscope data, accelerometer data, and/or magnetometer data) from one or more motion sensor(s) 204 and generates an output that is independent and/or partially independent of inertial data. As described herein, the SLAM system 212 can be optimized for a particular type of moving platform using an associated SP configuration.

According to some examples, the platform manager 240 determines whether the headset is on a moving platform and/or determine the type of the moving platform. In some configurations, the platform manager 240 analyzes sensor data 202 from one or sensors (e.g., image data 202A, motion data 202B, audio data 202C, and/or other sensor data 202D) to identify whether the headset 205 is on/within a moving platform and the type of moving platform. In some examples, the platform manager 240 uses one or more machine learning models 250 to identify whether the platform is moving and the type of platform. According to some configurations, the machine learning model(s) may be configured to receive sensor data 202 to identify that the headset is on a moving platform and a type of the moving platform.

The machine learning model(s) 250 may be trained using movement patterns of moving platforms (e.g., an airplane, a car, a train, ...) and human motion movement patterns to distinguish between physical environment motion and user motion. For example, motion of the physical environment such as a train may follow a constant and low frequency pattern, characterized by movements such as, inter alia, moving along a track, accelerating, decelerating, or maintaining a specific velocity. Likewise, motion of a user may include smaller, more intricate movements.

In some examples, the machine learning model(s) 250 are trained using actual data collected from moving platforms to learn to separate and filter differing relevant motions for improved accuracy and performance. According to some configurations, to help improve the accuracy of the model(s) 250, the image data used to train the models 250 includes image data obtained from fisheye cameras (i.e., wide field of view), and/or cameras designed to operate in low light levels. The sensor data may also include data from sensors such as doppler radar sensors or light detection and ranging (LIDAR) sensors to provide velocity information for the machine learning model. Additionally, the machine learning model(s) may utilize additional data from sensors such as ultra-wideband (UWB), Wi-Fi, lasers, cell-based sensors to provide global positioning information to assist with localization attributes.

Different machine learning model(s) 250 can be used to determine whether the headset device 205 is on a moving platform and the type of the moving platform. For example, model 254A may be an image-based model that detects that the headset device 205 is on a moving platform using image data 202. In some examples, the image-based model may be trained using high quality image data generate by cameras that operate in low-light and have a wide field of view.

In some examples, the machine learning model(s) 250 may include a machine learning model configured to detect windows. Tracking performance can degrade with high texture scenes, causing virtual content to lose its spatial anchoring, resulting in erratic shaking or unintended drifting relative to the physical environment. According to some configurations, the machine learning model may utilize a Transformer-CNN fused backend to learn the spatial features for window detection. This allows the image-based processing manager 210 to exclude the scene outside the moving platform to reduce the noise in feature embedding introduced by irrelevant dynamic features. Additionally, this machine learning model may also be used to assist in determining the type of the moving platform itself. For example, the detected shape and style of the window can be used to differentiate between platform types (e.g., differentiating an automobile from a train or a bus) since window shapes, sizes, and styles vary between cars, trains, and buses.

Model 254B can be an audio model that uses audio data 202 to identify a type of the moving platform. For instance, each type of moving platform may have a unique sound provide (e.g., from engine, structure and environment). The audio model 254B may also be used to help improve the identification compared to using an image-based model that may not perform well in low light interiors or in visually ambiguous interiors (e.g., a train cabin looking like a room in a house, a train cabin looking like a restaurant, an RV looking like a room, ...). Sound characteristics associated with a particular platform. For instance, a train may have a primary sound (e.g., low rumble, clacking sound that is rhythmic and steady where rail joints may be heard and soft vibrations. Airplanes may have an engine drone, air rush, constant white noise, intercoms, muffled cabin sounds. A non-electric car may have engine sounds, exhaust sounds, gear shifts, and the like. Model 254C can be a motion-based model that uses motion data 202B to identify the type of the moving platform. For example, each type of moving platform may have unique motions. The model 254N may be a model that includes different types of sensor data (e.g., image and motion, image and motion and audio, ...). Other models 254, such as a location model (not shown) may be a location-based model that uses location data to identify the type of the moving platform. For example, the location data (e.g., GPS data) may indicate that the user is located on a runway/tarmac and identify the type of moving platform is an airplane. As another example, the location data may indicate that the user is on a railroad track or located at a train station and identify the type of moving platform as a train. Generally, the location-based model can be trained to determine a type of the moving platform based on other location data (e.g., when located at a bus station, the type of moving platform can be a bus, when located on a driveway/parking lot, the type of moving platform can be a car/truck/motorcycle, ...).

In some examples, in response to the platform manager 230 determining that the headset 205 is on a moving platform, a "prompt" is provided/presented to the user on a display 230 of the headset 205. The prompt can be used to activate a "travel mode" of the headset. As discussed above, the "travel mode" may be selected (manually by a user and/or programmatically by a component/device) for use when the headset is on/within a moving platform and is directed at stabilizing the visuals (e.g., keeping the items in the view of the headset stable).

In response to the travel mode being activated, the platform manager 240 can select the SP configuration for use by the image-based processing manager 250. The platform manager selects the SP configuration from a plurality of different SP configurations 242, based on the type of the moving platform. For instance, when the moving platform type identifies that the headset is on a train, then a SP configuration 242 configured/optimized for a train is selected. Similarly, when the moving platform type indicates that the headset 205 is on a plane, then a SP configuration 242 for a plane is selected. When the moving platform type indicates that the headset is on a car, then a SP configuration 242 for a car are selected, and the like. In some examples, the user of the headset does not identify the SP configuration 242 to select. Instead, the SP configuration is automatically selected based on the identified type of moving platform. In this way, once the travel mode for the headset is activated, the SP configuration optimized for the type of moving platform that the headset is on has already been selected. For example, if the type of moving platform is identified to be an airplane, then the airplane SP configuration may include disabling gyros on the headset such that the view within the headset is stable.

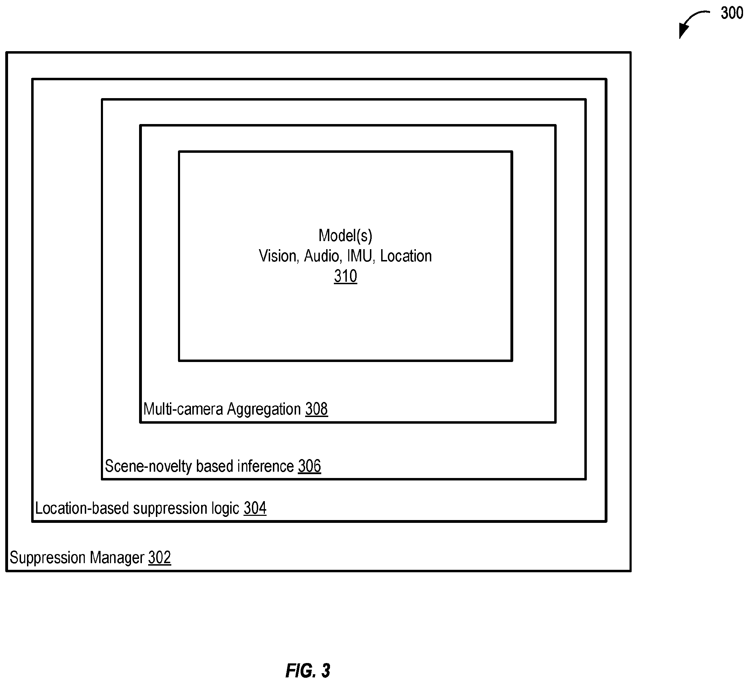

According to some examples, the platform manager 240 may perform false positive and power saving techniques to reduce false positives associated with determining when a headset is on a moving platform. For instance, in order to increase the accuracy of the detection that the headset is on a moving platform, the system may employ one or more multi-camera aggregation techniques, scene-novelty based inference techniques, and location-based suppression techniques in addition to the initial identification performed by one or more machine learning models. See FIG. 3 and related discussion for further details.

Implementations of the subject technology described herein provide an XR system for displaying virtual content with an electronic device that is on or near a moveable platform in various motion states of the moveable platform, such as when the moveable platform is stationary or in motion with a constant or changing velocity. Because an electronic device that displays virtual content often tracks its own motion in the physical setting in order to render the virtual content at a fixed location in a virtual or mixed reality setting, motion of the electronic device that is due to motion of a moving platform can cause undesired errors in the display of the virtual content.

For example, a virtual object can be displayed to appear at a stationary location on the floor next to a user that is seated on a train that currently not moving, by an electronic device that is being carried or worn (e.g., on the head) of the user. As the user turns the device to look around the extended reality setting that includes the train and the virtual object, the motion of the electronic device relative to the stationary train is detected and used to modify the displayed location of the virtual object on the display of the electronic device, so that the virtual object appears to be stationary at the location on the floor. However, when the train begins to move, the electronic device also detects this train motion and may incorrectly interpret the train motion as motion of the device relative to the location at which the virtual object is displayed. In such a scenario, the electronic device may incorrectly move the location of the virtual object on the display of the electronic device to account for the motion of the train, resulting in the virtual object erroneously appearing to slide backwards down the aisle of the train.

As an example, inertial measurement unit (IMU) sensors can be used to determine an orientation and/or motion of the device, whether the device is stationary relative to the ground, on a stationary moveable platform, on a moveable platform that is moving with a constant velocity relative to the ground, or on a platform having a changing velocity ( e.g., accelerating or decelerating) relative to the ground.

For example, XR systems may be provided that can detect and account for the motion of a moving platform (e.g., a moveable platform that is currently in motion). For example, an electronic device may detect that it is on a moving platform and control the display of virtual content in accordance with the motion of the moving platform and/or the device motion on the moving platform. As an example, the electronic device can control the display of virtual content by using optical tracking data (e.g., and reducing, and/or otherwise managing the use of other sensor data such as some or all of the inertial data) when the moving platform is accelerating or decelerating.

In some configurations, the headset 205 can use a specific SP configuration 243 to manage the use of sensor data 204, such as motion data 202B from one or more inertial sensors (in some operational scenarios in which the headset device 205 is on a moving platform) by continuing to use the inertial data, but with reduced weights (e.g., treating the inertial data as higher uncertainty data as compared to the treatment of the inertial data when the electronic device is not on a moving platform). In this way, inertial data such as IMU measurements can be used differently depending on the motion state of a moveable platform on which the headset device 205 is disposed. In some examples, the weights can also be varied based on a scene profile of the physical environment in which the electronic device is disposed. In various operational scenarios, weights that are applied to the inertial data for a specific ISP is an optimization of a cost function that can be varied, depending on the platform motion, from a set of original weights that are applied when the electronic device is stationary or on non-moving platform or a moveable platform in a constant velocity motion state. For example, the weights can be reduced, based on the platform motion, to zero (e.g., during times of high disturbance motion of the moving platform) or to any weight value between the original value and zero, for "milder" motion conditions of the moving platform.

According to some examples, an XR application 220 may receive environment information (e.g., including location information, motion information, scene information, etc.) from image-based processing manager 210. XR application 220 may be a gaming application, a media player application, a content-editor application, a training application, a simulator application, or generally any application that displays computer-produced (CP) or virtual content in a virtual setting and/or at locations that depend on the physical setting, such as by anchoring the virtual content to an anchoring location that is fixed relative to a fixed or moving reference frame in the physical setting. In one or more implementations, one or more of the XR application 220, the image-based processing manager 210, and/or the rendering manager 224, may be a part of an operating system level process and/or framework that provides for virtual content anchoring functionality.

Image-based processing manager 210, XR application 220, and/or rendering manager 225 may determine an anchoring location for virtual content to be generated by the XR application 220 based on the detected motion of the electronic device. For example, headset 205 (e.g., image-based processing manager 210) may identify device motion of the headset 205 using one or more sensors 204 (e.g., cameras), and may determine that the device motion includes a first component associated with a motion of a moving platform and a second component that is separate from the motion of the moving platform. The first component and the second component of the motion of the device can be detected and/or separated from each other using one or more combinations of cameras and/or sensors on the electronic device itself and/or on the moving platform.

The headset 205 may determine an anchoring location that is fixed relative to the moveable platform in any of various motion states of the moveable platform. The determined anchoring location can be determined and/or used by XR application 220 and/or rendering manager 225 for display of virtual content anchored to the anchoring location that is fixed relative to a moveable platform, using at least the second component of the device motion that is separate from the motion of the moving platform. For example, the second component of the device motion (e.g., the motion of the device relative to the moving platform) can be used to track the location of the headset 205 relative to the determined anchoring location. The virtual content (e.g., one or more virtual objects or an entire virtual setting) can be displayed anchored to the anchoring location that is fixed relative to the moving platform by rendering the virtual content anchored to the anchoring location using rendering manager 225 and displaying the rendered virtual content using display 230. In any of various implementations, image-based processing manager 210, XR application 202, and/or rendering manager 225 can generate anchoring locations that are fixed relative to a moveable platform

For example, once content (e.g., a virtual cup, virtual document, virtual television screen, virtual movie theater screen, virtual keyboard, virtual setting, etc.) has been generated by XR application 220, the content can be provided to a rendering manager 225. Environment information such as a depth map of the physical setting, can also be provided to rendering manager 225. Rendering manager 225 can then render the content from XR application 202 for display by display 230 of headset 205. The content is rendered for display at the appropriate location on the display 230 to appear in association with the anchoring location (e.g., provided by image-based processing manager 210).

Display 230 may be, for example, an opaque display, and a camera may be configured to provide a video pass-through feed to the opaque display. The content may be rendered for display at a location on the display corresponding to the displayed location of the anchoring location in the video pass-through. Display 225 may be, as another example, a transparent or translucent display. The content may be rendered for display at a location on the display corresponding to a direct view, through the transparent or translucent display, of the anchoring location. Although the example of FIG. 2 illustrates a rendering manager 225 that is separate from XR application 202, it should be appreciated that, in some implementations, XR application 202 may render content for display by display 230 without using a separate rendering manager 225.

### III. REDUCING FALSE POSITIVES INDICATING CHANGE OF MOVING PLATFORM

In some examples, instead of immediately presenting a prompt to change to a travel mode for the headset in response to a determination made by one or more machine learning models, one or more additional techniques can be performed to reduce false positives associated with determining when a headset is on a moving platform. For instance, in order to increase the accuracy of the detection that the headset is on a moving platform, a headset device may employ one or more multi-camera aggregation techniques, scene-novelty based inference techniques, and location-based suppression techniques in addition to the initial identification performed by one or more machine learning models.

FIG. 3 shows a simplified diagram of an architecture 300 for reducing false positives of indicating the headset device is on a moving platform, in accordance with some examples. As illustrated in FIG. 3., suppression manager 302 may perform one or more of location-based suppression logic techniques 304, scene-novelty based inference techniques 306, multi-camera aggregation techniques 308, in addition to the use of one or more machine learning models 310.

In some configurations, the multi-camera aggregation technique 308 includes obtaining image data from a plurality of cameras. In some examples, the cameras are fisheye cameras that are configured to operate in low-light environments. The cameras may also be "always-on" cameras that continually obtain image data such that the user does not need to turn on and off the cameras. The use multiple cameras provide a large field of view of the environment as each camera can be pointed at a different location. The results and/or data from each sensor (camera, audio sensor, imu etc.) can be used to determine whether the headset is on a moving platform, and each of the determinations can be combined to provide a final determination of whether the headset is on a moving platform. For instance, image data from each camera can be used to generate a classification (e.g., on/off a moving platform) along with a confidence score of the classification. The classifications can be combined according to the confidence score to determine whether the combined confidence of a particular classification is sufficiently high. According to some configurations, if the confidence of a platform motion classification exceeds a specified threshold, the SP configurations can be automatically changed/selected without providing a user prompt, or in other examples, a user can be prompted to confirm the platform is moving or even confirm the particular type of transportation.

According to some examples, the scene-novelty based inference techniques 306 helps in avoiding false positives and conserve battery of the headset by performing a scene analysis that determines when novel images (gazes) are detected indicating that the headset may be in a location that has not already been identified. In this way, some of the classification techniques are not repeatedly performed when the user is viewing the same part of the environment.

In some examples, the location-based suppression logic 304 uses location information to further improve avoiding false positives. The location-based suppression logic 304 can be used to identify that the headset device is at a location that is known not to be associated with a moving platform. In some examples, a connection signal can be used to determine if the headset is in a car, or connected to some other moving platform (e.g., using Bluetooth, WI-FI, or some other type of connection signal. Other location-based suppression logic can also be used. For instance, the system can determine whether the headset is in a known environment based on a list of known environments, based on a map generated by the system, and/or based on other characteristics associated with the map (e.g. a room in which the headset is located is larger than a predetermined size, e.g., 10ft x10ft).

### IV. SUPPRESSING A PROMPT TO CHANGE HEADSET DEVICE TO TRAVEL MODE

In some examples, the headset device may reduce false positives by suppressing the presentation of the prompt to change to a travel mode based on location information.

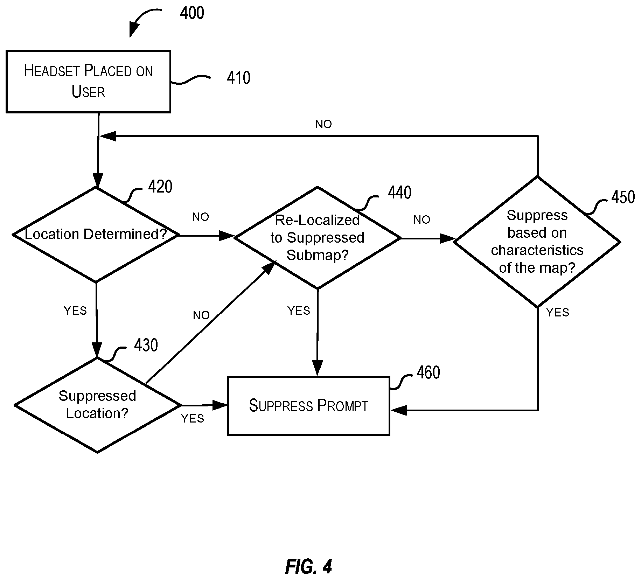

FIG. 4 is a simplified flowchart 400 of a technique for suppressing a hint to change to a travel mode based on location information, according to at least one example. In some implementations, one or more method blocks of FIG. 4 may be performed by an electronic device (e.g., headset device 105). In some implementations, one or more method blocks of FIG. 4 may be performed by another device or a group of devices separate from or including the electronic device.

At 410, a determination is made that the headset 105 is placed on the user (e.g., "donned"). As discussed above, the headset device 105 can determine from sensor data 204 that the headset 105 is on the head of a user, such as user 102. For example, the headset device 105 can determine using one or more cameras that the headset device 105 is placed on the head of the user 102.

At 420, a determination is made as to whether a location of the headset device 105 has been determined. According to some examples, the headset device 105 can determine the location using different techniques. For instance, the location may be determined from a GPS, from image data from Wi-Fi, and the like. When a location is determined, the process moves to 430. When a location is not determined, the process moves to 440.

At 430, a determination is made as to whether the determined location of the headset device 105 is a suppressed location. According to some examples, a "suppressed location" is a location that has been identified as a location that is not associated with a moving platform. For instance, a suppressed location may be the location of a house, a building, a room, and/or some other location that has been specified to not use travel mode and/or a location that has previously been identified to not use travel mode (e.g., the user specifies one or more locations to not use travel mode). When the location is not a suppressed location, the process moves to 440. When a location is a suppressed location, the process moves to 460.

At 440, a determination is made as to whether the location of the headset device 105 is at a location within a map that has been identified to not use travel mode based on a re-localization of the map. For instance, the headset device 105 may perform a re-localization to obtain a current location to a known map that is not associated with using travel mode (e.g., the map includes locations that are suppressed locations). When the location is a location associated with a map that is not associated with travel mode, the process moves to 450. When a location is associated with a map that is associated with travel mode, the process moves to 460.

At 450, a determination is made as to whether the location of the headset device 105 is to be suppressed based on characteristics of the current map. For instance, the headset device 105 may determine the size of the current map, and when the map is larger than a specified threshold (e.g., 10ft x 10ft, 8ft by 8ft) to suppress the location. A map larger than a specified size may indicate that the headset device is within a vehicle. When the location is not to be suppressed, the process moves to 420. When a location is associated with a map that is associated with travel mode, the process moves to 460.

At 460, the hint is suppressed. As discussed above, the hint may be suppressed to reduce false positives that indicate that the user should switch to the travel mode.

### V. MODEL TRAINING

A *"machine learning model"* (ML model) can refer to a software module configured to be run on one or more processors to provide a classification or numerical value of a property of one or more samples. An ML model can include various parameters (e.g., for coefficients, weights, thresholds, functional properties of function, such as activation functions). As examples, an ML model can include at least 10, 100, 1,000, 5,000, 10,000, 50,000, 100,000, one million, ten million, 100 million, or one billion parameters. An ML model can be generated using sample data (e.g., training samples) to make predictions on test data. Various number of training samples can be used, e.g., at least 10, 100, 1,000, 5,000, 10,000, 50,000, 100,000, or 200,000 training samples. One example is an unsupervised learning model such as hidden Markov model (HMM), clustering (e.g., hierarchical clustering, k-means, mixture models, model-based clustering, density-based spatial clustering of applications with noise (DBSCAN), and OPTICS algorithm), approaches for learning latent variable models such as Expectation-maximization algorithm (EM), method of moments, and blind signal separation techniques (e.g., principal component analysis, independent component analysis, non-negative matrix factorization, singular value decomposition), and anomaly detection (e.g., local outlier factor and isolation forest). Another example type of model is supervised learning that can be used with embodiments of the present disclosure. Example supervised learning models may include different approaches and algorithms including analytical learning, statistical models, artificial neural network (e.g. including convolutional and/or transformer layers) that may have 1-10 layers as examples, recurrent neural network (e.g., long short term memory, LSTM), boosting (meta-algorithm), bootstrap aggregating (bagging) such as random forests, support vector machine (SVM), support vector (SVR), Bayesian statistics, case-based reasoning, decision tree learning, inductive logic programming, linear regression, logistic regression, Gaussian process regression, genetic programming, group method of data handling, kernel estimators, learning automata, learning classifier systems, minimum message length (decision trees, decision graphs, etc.), multilinear subspace learning, naive Bayes classifier, maximum entropy classifier, conditional random field, nearest neighbor algorithm, probably approximately correct learning (PAC) learning, ripple down rules, a knowledge acquisition methodology, symbolic machine learning algorithms, subsymbolic machine learning algorithms, minimum complexity machines (MCM), ordinal classification, data pre-processing, handling imbalanced datasets, statistical relational learning, or Proaftn (a multicriteria classification algorithm), or an ensemble of any of these types. Supervised learning models can be trained in various ways using various cost/loss functions that define the error from the known label (e.g., least squares and absolute difference from known classification) and various optimization techniques, e.g., using backpropagation, steepest descent, conjugate gradient, and Newton and quasi-Newton techniques.

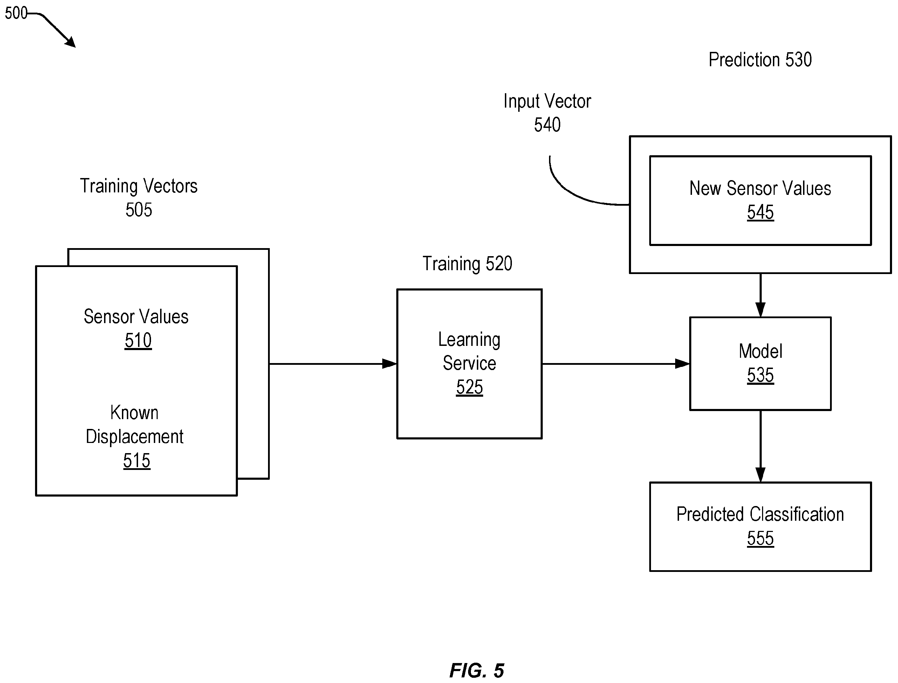

FIG. 5 depicts an architecture for training a machine learning model according to the embodiments of the present disclosure. Training vectors 505 are shown with sensor values 510 and a known displacement 515. Sensor values 510 can include the output of sensors including image sensors, audio sensors, motion sensors (e.g., gyroscopes, magnetometers, accelerometers, ...). For ease of illustration, only two training vectors are shown, but the number of training vectors may be much larger, e.g., 10, 60, 100, 1,000, 10,000, 100,000, or more. Training vectors could be made for different physical environments, the same physical environment over different time periods.

For purposes of illustration, an examples of training a model using sensor data obtained from IMU sensors will be described. Sensor values 510 have property fields that can correspond to the sensor values output by the IMU sensor(s) of a target mobile device and the skilled person will appreciate the various ways that such sensor values can be configured. Known displacements 515 include the position of an electronic device during a time period that corresponds to the time the sensor value 510 were recorded. For example, the known displacement can be determined by an electronic device using visual odometry, or visual inertial odometry, techniques. The known displacement 515 can be coordinates and an orientation within a reference frame. The known displacement 515 can be determined by the same device that generated the sensor values 510, or the known displacement 515 and the sensor values 510 can be generated by separate devices. For example, a mobile device with a camera can be mounted at a fixed position on an individual (e.g., on the individual's chest or on top of the individual's head). As the individual moves around a physical environment, the mounted mobile device can compare sequential images to track the mounted device's position and orientation in the environment. A second mobile device can concurrently record sensor values 510 as the individual moves around the environment. The training vector can include a known displacement 515 and the sensor values 510 that correspond to that displacement. A training vector 505 may include information about the individual that was used to record the information in the vector (e.g., height, weight, age, etc.).

Training vectors 505 can be used by a learning service 525 to perform training 520. A service, such as learning service 525, being one or more computing devices configured to execute computer code to perform one or more operations that make up the service. Learning service 525 can optimize parameters of a model 535 such that a quality metric (e.g., accuracy of model 535) is achieved with one or more specified criteria. The accuracy may be measured by comparing known displacements 515 to predicted displacements. Parameters of model 535 can be iteratively varied to increase accuracy. Determining a quality metric can be implemented for any arbitrary function including the set of all risk, loss, utility, and decision functions.

In some embodiments of training, a gradient may be determined for how varying the parameters affects a cost function, which can provide a measure of how accurate the current state of the machine learning model is. The gradient can be used in conjunction with a learning step (e.g., a measure of how much the parameters of the model should be updated for a given time step of the optimization process). The parameters (which can include weights, matrix transformations, and probability distributions) can thus be optimized to provide an optimal value of the cost function, which can be measured as being above or below a threshold (i.e., exceeds a threshold) or that the cost function does not change significantly for several time steps, as examples. In other embodiments, training can be implemented with methods that do not require a hessian or gradient calculation, such as dynamic programming or evolutionary algorithms.

A prediction stage 530 can provide a predicted displacement 555 for a new entity's entity signature vector 540 based on new sensor values 545. The predicted displacement 555 can be a predicted speed for the tracking mobile device corresponding to the input vector 540. The new sensor values can be of a similar type as sensor values 510. If new sensor values are of a different type, a transformation can be performed on the data to obtain data in a similar format as sensor values 510. Ideally, predicted displacement 555 corresponds to the true displacement for input vector 540.

Examples of machine learning models include deep learning models, neural networks (e.g., deep learning neural networks), kernel-based regressions, adaptive basis regression or classification, Bayesian methods, ensemble methods, logistic regression and extensions, Gaussian processes, support vector machines (SVMs), a probabilistic model, and a probabilistic graphical model. Embodiments using neural networks can employ using wide and tensorized deep architectures, convolutional layers, dropout, various neural activations, and regularization steps.

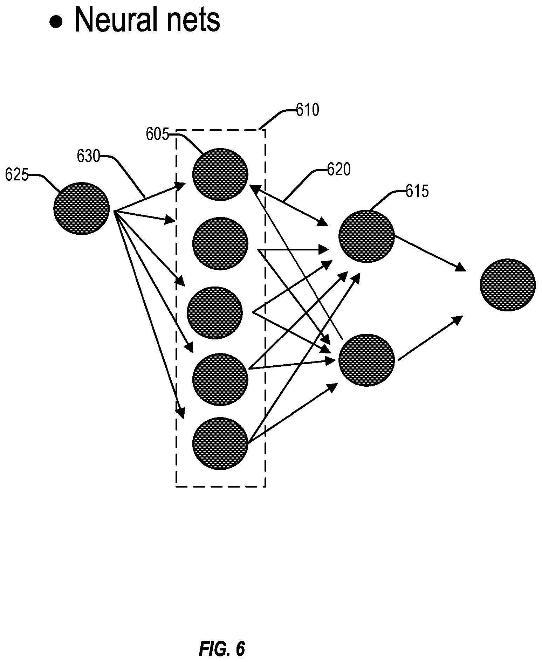

FIG. 6 shows an example machine learning model of a neural network. As an example, model 635 can be a neural network that comprises a number of neurons (e.g., Adaptive basis functions) organized in layers. For example, neuron 605 can be part of layer 610. The neurons can be connected by edges between neurons. For example, neuron 605 can be connected to neuron 615 by edge 620. A neuron can be connected to any number of different neurons in any number of layers. For instance, neuron 605 can be connected to neuron 625 by edge 630 in addition to being connected to neuron 615.

The training of the neural network can iteratively search for the best configuration of the parameter of the neural network for feature recognition and prediction performance. Various numbers of layers and nodes may be used. A person with skills in the art can easily recognize variations in a neural network design and design of other machine learning models. For example, neural networks can include graph neural networks that are configured to operate on unstructured data. A graph neural network can receive a graph (e.g., nodes connected by edges) as an input to the model and the graph neural network can learn the features of this input through pairwise message passing. In pairwise message passing, nodes exchange information, and each node iteratively updates its representation based on the passed information. More detail about graph neural networks can be found in the following reference: Wu, Zonghan, et al. "A comprehensive survey on graph neural networks." IEEE transactions on neural networks and learning systems 32.1 (2020): 8-2 8."

### VI. METHOD FOR SELECTION OF LOCALIZATION AND MAPPING CONFIGURATIONS

According to some examples, the headset device may select a SP configuration after determining that the headset device is moving and the type of the moving platform.

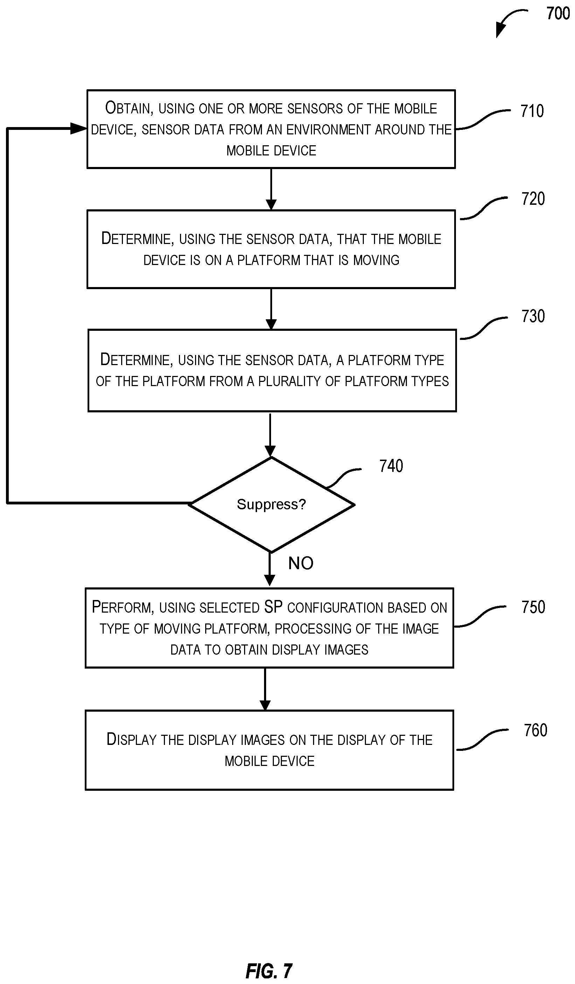

FIG. 7 is a simplified flowchart 700 of a technique for determining a type of a moving platform and selection of a SP configuration, according to at least one example. In some implementations, one or more method blocks of FIG. 7 may be performed by an electronic device (e.g., headset device 105 of FIG. 1, or headset device 205 of FIG. 2). In some implementations, one or more method blocks of FIG. 7 may be performed by another device or a group of devices separate from or including the electronic device.

At 710, sensor data is obtained from one or more sensors of the mobile device from an environment around the mobile device. As discussed above, the headset device 205 may obtain image data 202A, motion data 202B, and/or other sensor data 202D as illustrated in FIG. 2.

At 720, the headset device 205 can determine, using the sensor data 202, that the mobile device is on a moving platform. According to some examples, the headset device 205 of FIG. 2 can analyze sensor data (e.g., image data, motion data, ...) using the platform manager 240 and/or some other component/device to determine that the headset 205 is on/within a moving platform. In some configurations, the headset device 205 uses one or more machine learning models 250.

At 730, the headset device 205 determines a platform type of the moving platform. According to some examples, the headset device 205 of FIG. 2 can analyze sensor data 202 (e.g., image data, motion data, ...) using platform manager 240 and/or some other component device to determine the type of moving platform. In some configurations, the headset device 205 uses one or more machine learning models 250 to determine the type of moving platform.

At 740, a determination is made as to whether to suppress changing the headset device to a travel mode. As discussed above, the headset device 105 of FIG. 1 may determine not to present a prompt 170 to change to a travel mode according to some examples. When the determination is made as to not suppress, the process moves to 750. When the determination is made to suppress, the process returns to 710.

At 750, signal-based processing is performed using the selected SP configuration based on the type of moving platform. As discussed above, a headset 205 of FIG. 2 may use a selected SP configuration 242 and image-based techniques (e.g., SLAM system(s) 212) to render and display objects so as to appear to the user of the headset 205 to be moving with the motion that is equal to the motion 142 of the moveable platform 145 as illustrated in FIG. 1 (e.g., so as to appear stationary on the moveable platform). For example, a SP configuration 242 for a particular moving platform may obtain but ignore some or all of the inertial data from the inertial sensors of the headset 205 when determining where to display objects while on the moveable platform 145.

At 760, the images generated are displayed on the display 230 of the headset device 205 of FIG. 2.

### VII. METHOD FOR USING SELECTED IMAGE SIGNAL PROCESSING SETTINGS

In some examples, the headset device uses a SP configuration when generating images to be displayed on the display of the headset.

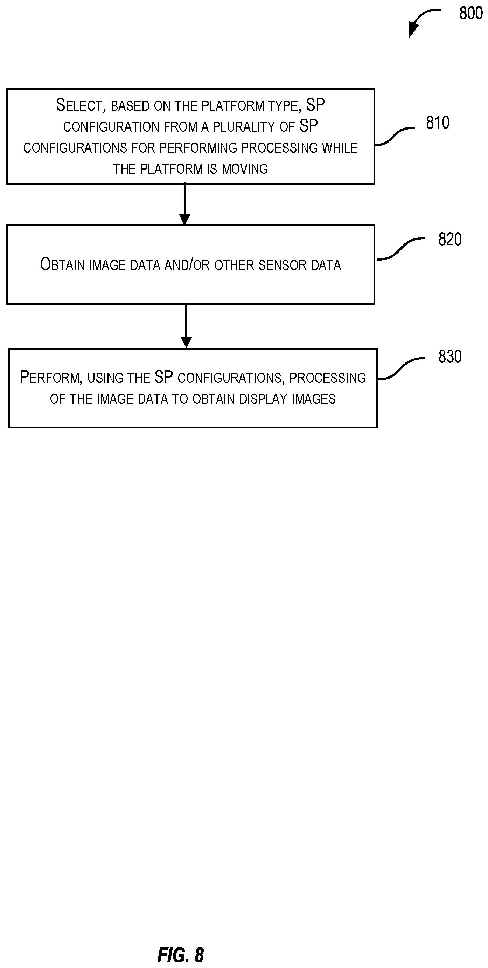

FIG. 8 is a simplified flowchart 800 of a technique for selecting a SP configuration and using the SP configuration to generate display images, according to at least one example. In some implementations, one or more method blocks of FIG. 8 may be performed by an electronic device (e.g., headset device 105 of FIG. 1 and/or headset device 205 of FIG. 2). In some implementations, one or more method blocks of FIG. 8 may be performed by another device or a group of devices separate from or including the electronic device.

At 810, a SP configuration is selected from a plurality of SP configurations 242 for performing image-based processing while the platform is moving. As discussed above, the headset 205 of FIG. 2 may use a selected SP configuration 242 based on the type of the moveable platform. For example, a SP configuration for a particular moving platform may obtain but ignore some or all of the inertial data from the inertial sensors of the headset 205 when determining where to display objects while on the moveable platform 145 of FIG. 1. As discussed above, the headset device 105 may obtain image data 202A, motion data 202B, audio data 202C, and/or other sensor data 204.

At 820, the headset device 205 obtains image data and/or other sensor data 202 to be displayed by the headset. According to some examples, the headset device 205 of FIG. 2 can analyze image data generated by the headset device 205 and/or other sensor data 202.

At 830, the headset device 205 generates display images using the selected SP configuration 242. As discussed above, the headset device 205 of FIG. 2 may use the selected SP configuration 242 and a SLAM system (e.g., SLAM system(s) 212) to obtain the display images.

### VIII. EXAMPLE DEVICE

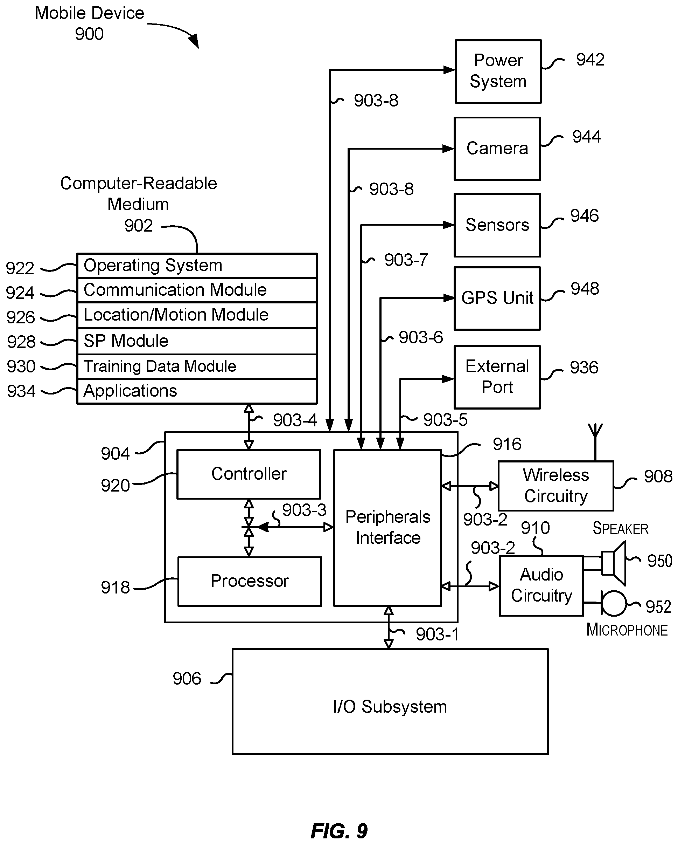

FIG. 9 is a block diagram of an example device 900, which may be a mobile device according to examples of the present disclosure. Device 900 generally includes computer-readable medium 902, a processing system 904, an Input/Output (I/O) subsystem 906, wireless circuitry 908, and audio circuitry 910 including speaker 950 and microphone 952. These components may be coupled by one or more communication buses or signal lines 903. Device 900 can be any portable mobile device, including a handheld computer, a tablet computer, a mobile phone, laptop computer, tablet device, media player, personal digital assistant (PDA), a key fob, a car key, an access card, a multi-function device, a mobile phone, a portable gaming device, a car display unit, or the like, including a combination of two or more of these items.

It should be apparent that the architecture shown in FIG. 9 is only one example of an architecture for device 900, and that device 900 can have more or fewer components than shown, or a different configuration of components. The various components shown in FIG. 9 can be implemented in hardware, software, or a combination of both hardware and software, including one or more signal processing and/or application specific integrated circuits.

Wireless circuitry 908 is used to send and receive information over a wireless link or network to one or more other devices' conventional circuitry such as an antenna system, an RF transceiver, one or more amplifiers, a tuner, one or more oscillators, a digital signal processor, a CODEC chipset, memory, etc. Wireless circuitry 908 can use various protocols, e.g., as described herein.

Wireless circuitry 908 is coupled to processing system 904 via peripherals interface 916. Interface 916 can include conventional components for establishing and maintaining communication between peripherals and processing system 904. Voice and data information received by wireless circuitry 908 (e.g., in speech recognition or voice command applications) is sent to one or more processors 918 via peripherals interface 916. One or more processors 918 are configurable to process various data formats for one or more application programs 934 stored on medium 902.

Peripherals interface 916 couple the input and output peripherals of the device to processor 918 and computer-readable medium 902. One or more processors 918 communicate with computer-readable medium 902 via a controller 920. Computer-readable medium 902 can be any device or medium that can store code and/or data for use by one or more processors 918. Medium 902 can include a memory hierarchy, including cache, main memory, and secondary memory.

Device 900 also includes a power system 942 for powering the various hardware components. Power system 942 can include a power management system, one or more power sources (e.g., battery, alternating current (AC)), a recharging system, a power failure detection circuit, a power converter or inverter, a power status indicator (e.g., a light emitting diode (LED)), and any other components typically associated with the generation, management and distribution of power in mobile devices.

In some examples, device 900 includes a camera 944. In some examples, device 900 includes sensors 946. Sensors 946 can include accelerometers, compasses, gyrometers, pressure sensors, audio sensors, light sensors, barometers, and the like. Sensors 946 can be used to sense location aspects, such as auditory or light signatures of a location.

In some examples, device 900 can include a GPS receiver, sometimes referred to as a GPS unit 948. A mobile device can use a satellite navigation system, such as the Global Positioning System (GPS), to obtain position information, timing information, altitude, or other navigation information. During operation, the GPS unit can receive signals from GPS satellites orbiting the Earth. The GPS unit analyzes the signals to make a transit time and distance estimation. The GPS unit can determine the current position (current location) of the mobile device. Based on these estimations, the mobile device can determine a location fix, altitude, and/or current speed. A location fix can be geographical coordinates such as latitudinal and longitudinal information. In other examples, device 900 may be configured to identify GLONASS signals, or any other similar type of satellite navigational signal.

One or more processors 918 run various software components stored in medium 902 to perform various functions for device 900. In some examples, the software components include an operating system 922, a communication module (or set of instructions) 924, a location module (or set of instructions) 926, a model module 928, a training data module 930, and other applications (or set of instructions) 934, such as a car locator app and a navigation app.

The unlock module 928 can use the input from camera 944 and/or sensors 946 to perform the unlock process as described herein.

Operating system 922 can be any suitable operating system, including iOS, Mac OS, Darwin, RTXC, LINUX, UNIX, OS X, WINDOWS, or an embedded operating system such as VxWorks. The operating system can include various procedures, sets of instructions, software components and/or drivers for controlling and managing general system tasks (e.g., memory management, storage device control, power management, etc.) and facilitates communication between various hardware and software components.

Communication module 924 facilitates communication with other devices over one or more external ports 936 or via wireless circuitry 908 and includes various software components for handling data received from wireless circuitry 908 and/or external port 936. External port 936 (e.g., USB, FireWire, Lightning connector, 60-pin connector, etc.) is adapted for coupling directly to other devices or indirectly over a network (e.g., the Internet, wireless LAN, etc.).

Location/motion module 926 can assist in determining the current position (e.g., coordinates or other geographic location identifier) and motion of device 900. Modern positioning systems include satellite-based positioning systems, such as Global Positioning System (GPS), cellular network positioning based on "cell IDs," and Wi-Fi positioning technology based on a Wi-Fi networks. GPS also relies on the visibility of multiple satellites to determine a position estimate, which may not be visible (or have weak signals) indoors or in "urban canyons." In some examples, location/motion module 926 receives data from GPS unit 948 and analyzes the signals to determine the current position of the mobile device. In some examples, location/motion module 926 can determine a current location using Wi-Fi or cellular location technology. For example, the location of the mobile device can be estimated using knowledge of nearby cell sites and/or Wi-Fi access points with knowledge also of their locations. Information identifying the Wi-Fi or cellular transmitter is received at wireless circuitry 908 and is passed to location/motion module 926. In some examples, the location module receives the one or more transmitter IDs. In some examples, a sequence of transmitter IDs can be compared with a reference database (e.g., Cell ID database, Wi-Fi reference database) that maps or correlates the transmitter IDs to position coordinates of corresponding transmitters, and computes estimated position coordinates for device 900 based on the position coordinates of the corresponding transmitters. Regardless of the specific location technology used, location/motion module 926 receives information from which a location fix can be derived, interprets that information, and returns location information, such as geographic coordinates, latitude/longitude, or other location fix data.

The one or more application programs 934 on the mobile device can include any applications installed on the device 900, including without limitation, a browser, address book, contact list, email, instant messaging, word processing, keyboard emulation, widgets, JAVA-enabled applications, encryption, digital rights management, voice recognition, voice replication, a music player (which plays back recorded music stored in one or more files, such as MP3 or AAC files), etc.

There may be other modules or sets of instructions (not shown), such as a graphics module, a time module, etc. For example, the graphics module can include various conventional software components for rendering, animating, and displaying graphical objects (including without limitation text, web pages, icons, digital images, animations, and the like) on a display surface. In another example, a timer module can be a software timer. The timer module can also be implemented in hardware. The time module can maintain various timers for any number of events.

The I/O subsystem 906 can be coupled to a display system (not shown), which can be a touch-sensitive display. The display system displays visual output to the user in a GUI. The visual output can include text, graphics, video, and any combination thereof. Some or all of the visual output can correspond to user-interface objects. A display can use LED (light emitting diode), LCD (liquid crystal display) technology, or LPD (light emitting polymer display) technology, although other display technologies can be used in other examples.

In some examples, I/O subsystem 906 can include a display and user input devices such as a keyboard, mouse, and/or track pad. In some examples, I/O subsystem 906 can include a touch-sensitive display. A touch-sensitive display can also accept input from the user based on haptic and/or tactile contact. In some examples, a touch-sensitive display forms a touch-sensitive surface that accepts user input. The touch-sensitive display/surface (along with any associated modules and/or sets of instructions in medium 902) detects contact (and any movement or release of the contact) on the touch-sensitive display and converts the detected contact into interaction with user-interface objects, such as one or more soft keys, that are displayed on the touch screen when the contact occurs. In some examples, a point of contact between the touch-sensitive display and the user corresponds to one or more digits of the user. The user can make contact with the touch-sensitive display using any suitable object or appendage, such as a stylus, pen, finger, and so forth. A touch-sensitive display surface can detect contact and any movement or release thereof using any suitable touch sensitivity technologies, including capacitive, resistive, infrared, and surface acoustic wave technologies, as well as other proximity sensor arrays or other elements for determining one or more points of contact with the touch-sensitive display.

Further, the I/O subsystem can be coupled to one or more other physical control devices (not shown), such as pushbuttons, keys, switches, rocker buttons, dials, slider switches, sticks, LEDs, etc., for controlling or performing various functions, such as power control, speaker volume control, ring tone loudness, keyboard input, scrolling, hold, menu, screen lock, clearing and ending communications and the like. In some examples, in addition to the touch screen, device 900 can include a touchpad (not shown) for activating or deactivating particular functions. In some examples, the touchpad is a touch-sensitive area of the device that, unlike the touch screen, does not display visual output. The touchpad can be a touch-sensitive surface that is separate from the touch-sensitive display, or an extension of the touch-sensitive surface formed by the touch-sensitive display.

In some examples, some or all of the operations described herein can be performed using an application executing on the user's device. Circuits, logic modules, processors, and/or other components may be configured to perform various operations described herein. Those skilled in the art will appreciate that, depending on implementation, such configuration can be accomplished through design, setup, interconnection, and/or programming of the particular components and that, again depending on implementation, a configured component might or might not be reconfigurable for a different operation. For example, a programmable processor can be configured by providing suitable executable code; a dedicated logic circuit can be configured by suitably connecting logic gates and other circuit elements; and so on.

Any of the software components or functions described in this application may be implemented as software code to be executed by a processor using any suitable computer language such as, for example, Java, C, C++, C#, Objective-C, Swift, or scripting language such as Perl or Python using, for example, conventional or object-oriented techniques. The software code may be stored as a series of instructions or commands on a computer readable medium for storage and/or transmission. A suitable non-transitory computer readable medium can include random access memory (RAM), a read only memory (ROM), a magnetic medium such as a hard-drive or a floppy disk, or an optical medium, such as a compact disk (CD) or DVD (digital versatile disk), flash memory, and the like. The computer readable medium may be any combination of such storage or transmission devices.

Computer programs incorporating various features of the present disclosure may be encoded on various computer readable storage media; suitable media include magnetic disk or tape, optical storage media, such as compact disk (CD) or DVD (digital versatile disk), flash memory, and the like. Computer readable storage media encoded with the program code may be packaged with a compatible device or provided separately from other devices. In addition, program code may be encoded and transmitted via wired optical, and/or wireless networks conforming to a variety of protocols, including the Internet, thereby allowing distribution, e.g., via Internet download. Any such computer readable medium may reside on or within a single computer product (e.g., a solid state drive, a hard drive, a CD, or an entire computer system), and may be present on or within different computer products within a system or network. A computer system may include a monitor, printer, or other suitable display for providing any of the results mentioned herein to a user.

As described above, one aspect of the present technology is the gathering and use of data available from various sources to improve prediction of users that a user may be interested in communicating with. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to predict users that a user may want to communicate with at a certain time and place. Accordingly, use of such personal information data included in contextual information enables people centric prediction of people a user may want to interact with at a certain time and place. Further, other uses for personal information data that benefit the user are also contemplated by the present disclosure. For instance, health and fitness data may be used to provide insights into a user's general wellness or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates examples in which users selectively block the use of, or access to, personal information data. That is, the present disclosure contemplates that hardware and/or software elements can be provided to prevent or block access to such personal information data. For example, in the case of people centric prediction services, the present technology can be configured to allow users to select to "opt in" or "opt out" of participation in the collection of personal information data during registration for services or anytime thereafter. In another example, users can select not to provide location information for recipient suggestion services. In yet another example, users can select to not provide precise location information, but permit the transfer of location zone information. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed examples, the present disclosure also contemplates that the various examples can also be implemented without the need for accessing such personal information data. That is, the various examples of the present technology are not rendered inoperable due to the lack of all or a portion of such personal information data. For example, users that a user may want to communicate with at a certain time and place may be predicted based on non-personal information data or a bare minimum amount of personal information, such as the content being requested by the device associated with a user, other non-personal information, or publicly available information.

Although the disclosure has been described with respect to specific examples, it will be appreciated that the disclosure is intended to cover all modifications and equivalents within the scope of the following claims.

All patents, patent applications, publications, and descriptions mentioned herein are incorporated by reference in their entirety for all purposes. None is admitted to be prior art. Where a conflict exists between the instant application and a reference provided herein, the instant application shall dominate.

Exemplary methods, mobile devices, computer-readable storage media, and systems are set out in the following items
1. A method performed by a mobile device having one or more cameras and one or more processors configured to perform signal-based processing for displaying extended reality on a display of the mobile device, the method comprising:
   obtaining, using one or more sensors of the mobile device, sensor data from an environment around the mobile device;
   determining, using the sensor data, that the mobile device is on a platform that is moving;
   determining, using the sensor data, a platform type of the platform from a plurality of platform types;
   selecting, based on the platform type, a signal processing (SP) configuration from a plurality of SP configurations for performing the signal-based processing while the platform is moving, wherein each of the plurality of SP configurations is associated with a different platform type;
   obtaining image data;
   performing, using the SP configuration, the signal-based processing of the image data to obtain display images; and
   displaying the display images on the display of the mobile device.
2. The method of item 1, wherein obtaining the sensor data from one or more sensors of the mobile device, comprises one or more of obtaining audio data from one or more audio sensors of the mobile device, obtaining image data from one or more cameras of the mobile device, or obtaining motion data from one or more motion sensors of the mobile device.
3. The method of item 1 or 2, further comprising presenting a prompt on a display of the mobile device that indicates to change to a travel mode responsive to determining that the mobile device is on the platform that is moving.
4. The method of item 3, further comprising suppressing the presenting of the prompt.
5. The method of item 4, wherein suppressing the presenting of the prompt comprises:
   obtaining, using a plurality of cameras of the mobile device, second image data of the environment; and
   detecting that the environment has not changed based on the second image data.
6. The method of any preceding item, further comprising determining that the platform is not moving and in response, performing a different signal-based processing.
7. The method of any preceding item, wherein determining the platform type of the platform from a plurality of platform types comprises using one or more machine learning models.
8. The method of item 7, wherein the one or more machine learning models includes at least one of a first machine learning model that receives image data, a second machine learning model that receives audio data, and a third machine learning model that receives motion data.
9. The method of any preceding item, wherein obtaining, using the one or more sensors of the mobile device, sensor data from the environment around the mobile device comprises obtaining image data from one or more cameras that include a wide-angle lens and operate in a low-light environment.
10. The method of any preceding item, further comprising:
   obtaining image data from a plurality of cameras; and
   wherein determining that the mobile device is on the platform that is moving is further based on the image data from the plurality of the cameras.
11. The method of any preceding item, further comprising:
   determining that the environment has changed based on a scene-novelty-based inference; and
   wherein determining that the mobile device is on the platform that is moving is further based on the scene-novelty-based inference.
12. The method of any preceding item, further comprising:
   determining a location of the mobile device; and
   wherein determining that the mobile device is on the platform that is moving is further based on the location of the mobile device.
13. The method of any preceding item, wherein performing the signal-based processing of the image data comprises:
   detecting a window within the image data; and
   excluding a portion of the image data corresponding to the window from the signal-based processing.
14. The method of any preceding item, further comprising:
   determining characteristics of a map of the environment, wherein the characteristics include a size of a room that includes the mobile device; and
   wherein determining that the mobile device is on the platform that is moving is further based on the characteristics of the map.
15. A mobile device, comprising:
   one or more sensors;
   one or more memories; and
   one or more processors in communication with the one or more memories and configured to execute instructions stored in the one or more memories to perform operations comprising:
      obtaining, using the one or more sensors, sensor data from an environment around the mobile device;
      determining, using the sensor data, that the mobile device is on a platform that is moving;
      determining, using the sensor data, a platform type of the platform from a plurality of platform types;
      selecting, based on the platform type, a signal processing (SP) configuration from a plurality of SP configurations for performing signal-based processing while the platform is moving, wherein each of the plurality of SP configurations is associated with a different platform type;
      obtaining image data;
      performing, using the SP configuration, the signal-based processing of the image data to obtain display images; and
      displaying the display images on the display of the mobile device.
16. The mobile device of item 15, wherein obtaining the sensor data from one or more sensors of the mobile device, comprises one or more of obtaining audio data from one or more audio sensors of the mobile device, obtaining image data from one or more cameras of the mobile device, or obtaining motion data from one or more motion sensors of the mobile device.
17. The mobile device of item 15 or 16, wherein performing the signal-based processing of the image data comprises:
   detecting a window within the image data; and
   excluding a portion of the image data corresponding to the window from the signal-based processing.
18. A computer-readable medium storing a plurality of instructions that, when executed by one or more processors of a computing device, cause the one or more processors to perform operations, comprising:
   obtaining, using one or more sensors of a mobile device, sensor data from an environment around the mobile device;
   determining, using the sensor data, that the mobile device is on a platform that is moving;
   determining, using the sensor data, a platform type of the platform from a plurality of platform types;
   selecting, based on the platform type, a signal processing (SP) configuration from a plurality of SP configurations for performing signal-based processing while the platform is moving, wherein each of the plurality of SP configurations is associated with a different platform type;
   obtaining image data;
   performing, using the SP configuration, the signal-based processing of the image data to obtain display images; and
   displaying the display images on the display of the mobile device.
19. The computer-readable medium of item 18, wherein obtaining the sensor data from one or more sensors of the mobile device, comprises one or more of obtaining audio data from one or more audio sensors of the mobile device, obtaining image data from one or more cameras of the mobile device, or obtaining motion data from one or more motion sensors of the mobile device.
20. The computer-readable medium of item 18 or 19, wherein performing the signal-based processing of the image data comprises:
   detecting a window within the image data; and
   excluding a portion of the image data corresponding to the window from the signal-based processing.
21. A system, comprising:
   one or more memories; and
   one or more processors in communication with the one or more memories and configured to execute instructions stored in the one or more memories to perform operations of a method of any of items 1-14.
22. A computer-readable medium storing a plurality of instructions that, when executed by one or more processors of a computing device, cause the one or more processors to perform operations of a method of any of items 1-14.

All The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method performed by a mobile device having one or more cameras and one or more processors configured to perform signal-based processing for displaying extended reality on a display of the mobile device, the method comprising:
obtaining, using one or more sensors of the mobile device, sensor data from an environment around the mobile device;
determining, using the sensor data, that the mobile device is on a platform that is moving;
determining, using the sensor data, a platform type of the platform from a plurality of platform types;
selecting, based on the platform type, a signal processing (SP) configuration from a plurality of SP configurations for performing the signal-based processing while the platform is moving, wherein each of the plurality of SP configurations is associated with a different platform type;
obtaining image data;
performing, using the SP configuration, the signal-based processing of the image data to obtain display images; and
displaying the display images on the display of the mobile device.

2. The method of claim 1, wherein obtaining the sensor data from one or more sensors of the mobile device, comprises one or more of obtaining audio data from one or more audio sensors of the mobile device, obtaining image data from one or more cameras of the mobile device, or obtaining motion data from one or more motion sensors of the mobile device.

3. The method of claim 1 or 2, further comprising presenting a prompt on a display of the mobile device that indicates to change to a travel mode responsive to determining that the mobile device is on the platform that is moving.

4. The method of claim 3, further comprising suppressing the presenting of the prompt.

5. The method of claim 4, wherein suppressing the presenting of the prompt comprises:
obtaining, using a plurality of cameras of the mobile device, second image data of the environment; and
detecting that the environment has not changed based on the second image data.

6. The method of any preceding claim, further comprising determining that the platform is not moving and in response, performing a different signal-based processing.

7. The method of any preceding claim, wherein determining the platform type of the platform from a plurality of platform types comprises using one or more machine learning models.

8. The method of claim 7, wherein the one or more machine learning models includes at least one of a first machine learning model that receives image data, a second machine learning model that receives audio data, and a third machine learning model that receives motion data.

9. The method of any preceding claim, wherein obtaining, using the one or more sensors of the mobile device, sensor data from the environment around the mobile device comprises obtaining image data from one or more cameras that include a wide-angle lens and operate in a low-light environment.

10. The method of any preceding claim, further comprising:
obtaining image data from a plurality of cameras; and
wherein determining that the mobile device is on the platform that is moving is further based on the image data from the plurality of the cameras.

11. The method of any preceding claim, further comprising:
determining that the environment has changed based on a scene-novelty-based inference; and
wherein determining that the mobile device is on the platform that is moving is further based on the scene-novelty-based inference.

12. The method of any preceding claim, further comprising:
determining a location of the mobile device; and
wherein determining that the mobile device is on the platform that is moving is further based on the location of the mobile device.

13. The method of any preceding claim, wherein performing the signal-based processing of the image data comprises:
detecting a window within the image data; and
excluding a portion of the image data corresponding to the window from the signal-based processing.

14. The method of any preceding claim, further comprising:
determining characteristics of a map of the environment, wherein the characteristics include a size of a room that includes the mobile device; and
wherein determining that the mobile device is on the platform that is moving is further based on the characteristics of the map.

15. A mobile device, comprising:
one or more sensors;
one or more memories; and
one or more processors in communication with the one or more memories and configured to execute instructions stored in the one or more memories to perform operations comprising:
obtaining, using the one or more sensors, sensor data from an environment around the mobile device;
determining, using the sensor data, that the mobile device is on a platform that is moving;
determining, using the sensor data, a platform type of the platform from a plurality of platform types;
selecting, based on the platform type, a signal processing (SP) configuration from a plurality of SP configurations for performing signal-based processing while the platform is moving, wherein each of the plurality of SP configurations is associated with a different platform type;
obtaining image data;
performing, using the SP configuration, the signal-based processing of the image data to obtain display images; and
displaying the display images on the display of the mobile device.

16. The mobile device of claim 15, wherein obtaining the sensor data from one or more sensors of the mobile device, comprises one or more of obtaining audio data from one or more audio sensors of the mobile device, obtaining image data from one or more cameras of the mobile device, or obtaining motion data from one or more motion sensors of the mobile device.

17. The mobile device of claim 15 or 16, wherein performing the signal-based processing of the image data comprises:
detecting a window within the image data; and
excluding a portion of the image data corresponding to the window from the signal-based processing.

18. A computer-readable medium storing a plurality of instructions that, when executed by one or more processors of a computing device, cause the one or more processors to perform operations, comprising:
obtaining, using one or more sensors of a mobile device, sensor data from an environment around the mobile device;
determining, using the sensor data, that the mobile device is on a platform that is moving;
determining, using the sensor data, a platform type of the platform from a plurality of platform types;
selecting, based on the platform type, a signal processing (SP) configuration from a plurality of SP configurations for performing signal-based processing while the platform is moving, wherein each of the plurality of SP configurations is associated with a different platform type;
obtaining image data;
performing, using the SP configuration, the signal-based processing of the image data to obtain display images; and
displaying the display images on the display of the mobile device.

19. The computer-readable medium of claim 18, wherein obtaining the sensor data from one or more sensors of the mobile device, comprises one or more of obtaining audio data from one or more audio sensors of the mobile device, obtaining image data from one or more cameras of the mobile device, or obtaining motion data from one or more motion sensors of the mobile device.

20. The computer-readable medium of claim 18 or 19, wherein performing the signal-based processing of the image data comprises:
detecting a window within the image data; and
excluding a portion of the image data corresponding to the window from the signal-based processing.
